# EUROPEAN PATENT APPLICATION

(11) **EP 2 889 508 A1**
(43) Date of publication of application: **01.07.2015**
(21) Application number: 14200656.8
(22) Date of filing: 30.12.2014
(51) Int. Cl.: F16H 3/00

(54) **Reverse transmission apparatus**

(30) Priority: 30.12.2013 KR 20130166376
(71) Applicant: Hyundai Dymos Incorporated, Seosan-si, Chungcheongnam-do 356-705 (KR)
(72) Inventor: Choi, Jin Wook, 138-930 Seoul (KR)
(74) Representative: Zimmermann, Tankred Klaus

(57) **Abstract**

Disclosed herein is a reverse transmission apparatus, including: a gear assembly (10) of a transmission; a driving input shaft (20) configured to be connected to the gear assembly; and a sprag assembly (30) configured to partially connect or cut off power of the gear assembly depending to a forward rotation or a reverse rotation of the driving input shaft so as to perform a shift operation, thereby freely performing a desired shift operation with a relatively simple configuration and a simple operation.

## Description

### Field of the Invention

Exemplary embodiments of the present invention relate to a reverse transmission apparatus, and more particularly, to a reverse transmission apparatus capable of freely performing a desired shift operation with a relatively simple configuration and a simple operation.

### Description of Related Art

Generally, a transmission of a vehicle is an apparatus which is installed between a clutch and a propeller shaft to increase or decrease a torque of an engine depending on a change in a driving state of the vehicle and enable the vehicle to be driven backward.

The typical transmission apparatus allows various shift mechanisms, such as a synchromesh, to selectively connect or control power, thereby performing a shift change.

Therefore, the typical transmission apparatus needs to include a shift gear or a pulley and a shift operation mechanism so as to meet a desired velocity ratio, such that a configuration thereof may be complicated and a size thereof may be increased.

For this reason, a development of an apparatus which may perform a desired shift operation with a relatively simple configuration and a simple operation is urgently required.

### [Related Art Document]

### [Patent Document]

(Patent Document 0001) Korean U.M. Application No. 20-1996-0068263

### SUMMARY OF THE INVENTION

An embodiment of the present invention is directed to a reverse transmission apparatus capable of freely performing a desired shift operation with a relatively simple configuration and a simple operation.

Other objects and advantages of the present invention can be understood by the following description, and become apparent with reference to the embodiments of the present invention. Also, it is obvious to those skilled in the art to which the present invention pertains that the objects and advantages of the present invention can be realized by the means as claimed and combinations thereof.

In accordance with an embodiment of the present invention, a reverse transmission apparatus includes: a gear assembly of a transmission; a driving input shaft configured to be connected to the gear assembly; and a sprag assembly configured to partially connect or cut off power of the gear assembly depending to a forward rotation or a reverse rotation of the driving input shaft so as to perform a shift operation.

The gear assembly may include: sun gears configured to be connected to the driving input shaft; a plurality of planetary gears rotating, engaging with the sun gears; and ring gears configured to be internally geared with the plurality of planetary gears, wherein the sprag assembly is coupled with the sun gear and the ring gear, respectively, through the driving input shaft.

The sprag assembly may include: a first sprag configured to be mounted on the driving input shaft, coupled with the sun gear connected to the driving input shaft, and restrict or unrestrict the rotation of the sun gear depending on the forward rotation or the reverse rotation of the driving input shaft; and a second sprag configured to be mounted on the driving input shaft, coupled with the ring gears internally geared with the plurality of planetary gears rotating, engaging with the sun gears, and restrict or unrestrict the rotation of the ring gear depending on the forward rotation or the reverse rotation of the driving input shaft.

### BRIEF DESCRIPTION OF THE DRAWINGS

FIG. 1 is a diagram illustrating the overall configuration of a reverse transmission apparatus according to an exemplary embodiment of the present invention.
FIG. 2 is a diagram viewed from viewpoint B of FIG. 1.

### DESCRIPTION OF SPECIFIC EMBODIMENTS

Various advantages and features of the present invention and methods accomplishing thereof will become apparent from the following description of embodiments with reference to the accompanying drawings.

However, the present invention is not limited to the exemplary embodiments set forth herein, but may be embodied in many different forms.

Rather, exemplary embodiments introduced herein are provided to make disclosed contents thorough and complete and sufficiently transfer the spirit of the present invention to those skilled in the art.

In the drawings, a thickness of layers and regions are exaggerated for clarity.

The terms "upper end", "lower end", "upper surface", "lower surface", "upper portion", "lower portion", etc., are used to differentiate relative positions of components.

For example, for convenience, when an upper side in the drawings refers to an upper portion and a lower side in the drawings refers to a lower portion, actually, unless deviating from the scope of the present invention, the upper may refer to the lower portion and the lower portion may refer to the upper portion.

Terms used in the present specification are used only in order to describe specific exemplary embodiments rather than limiting the present invention.

Singular forms are intended to include plural forms unless the context clearly indicates otherwise.

It is to be understood that the terms "comprises" or "have" used in this specification specify the presence of stated features, steps, operations, components, parts mentioned in this specification, or a combination thereof, but do not preclude the presence or addition of one or more other features, numerals, steps, operations, components, parts, or a combination thereof.

Unless defined otherwise, it is to be understood that all the terms used in the specification including technical and scientific terms has the same meaning as those that are understood by those who skilled in the art.

Generally, it is to be understood that the terms defined by the dictionary are identical with the meanings within the context of the related art, and they should not be ideally or excessively formally defined unless the context clearly dictates otherwise.

Hereinafter, exemplary embodiments of the present invention will be described in detail with reference to the accompanying drawings.

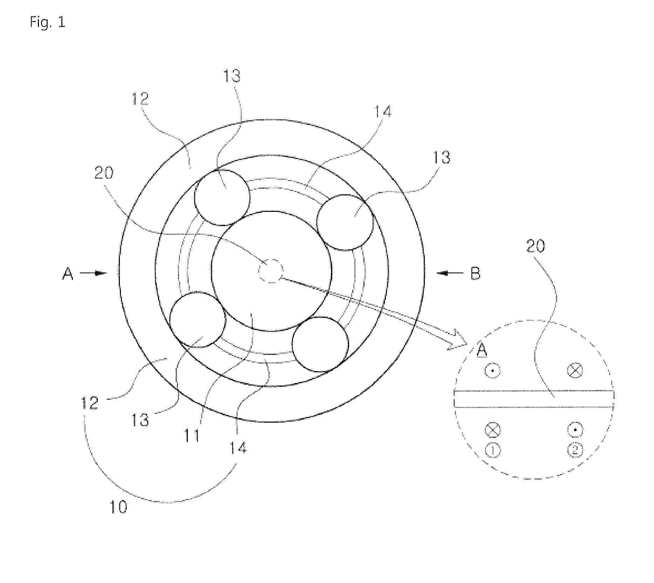

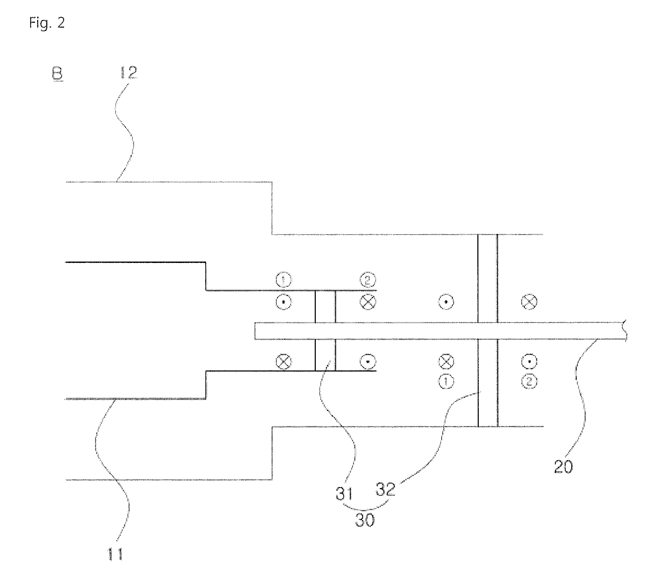

FIG. 1 is a diagram illustrating the overall configuration of a reverse transmission apparatus according to an exemplary embodiment of the present invention and FIG. 2 is a diagram viewed from viewpoint B of FIG. 1.

For reference, non-explained reference numeral 14 represents a planetary gear carrier, and in FIGS. 1 and 2, mark '⊙' represents a direction which approaches a reader from a ground viewed by the reader and mark ⊗ represents a direction which is away from a reader from a ground viewed by the reader.

As illustrated, a reverse transmission apparatus according to an exemplary embodiment of the present invention may be configured to include a gear assembly 10, a driving input shaft 20, and a sprag assembly 30.

The gear assembly 10 is embedded in a transmission and thus a shift operation is performed by a gear combination and the driving input shaft 20 is connected to the gear assembly 10 to transfer a driving force to the gear assembly 10. In this case, the transmission according to the exemplary embodiment of the present invention may be configured as a vehicle transmission.

The sprag assembly 30 performs a shift operation by partially connecting or cutting off power of the gear assembly 10 depending on a forward rotation or a reverse rotation of the driving input shaft 20.

Therefore, the reverse transmission apparatus according to the exemplary embodiment of the present invention allows the sprag assembly 30 to simply perform the shift operation by partially connecting or cutting off the power of the gear assembly 10 depending on only the forward rotation or the reverse rotation of the driving input shaft 20, and does not require complicated and bulky parts like the transmission apparatus according to the related art.

The present invention may apply the foregoing exemplary embodiment and may apply various exemplary embodiments to be described below.

The gear assembly 10 includes sun gears 11 which are connected to the driving input shaft 20, a plurality of planetary gears 12 rotating, engaging with the sun gears 11, and ring gears 13 which are internally geared with the plurality of planetary gears 12.

Here, the sprag assembly 30 is coupled with the sun gear 11 and the ring gear 13, respectively, through the driving input shaft 20.

In this case, the sprag assembly 30 may be configured to include first and second sprags 31 and 32.

The first sprag 31 is mounted on the driving input shaft 20, coupled with the sun gear 11 which is connected to the driving input shaft 20, restricts or unrestricts the rotation of the sun gear 11 depending on the forward rotation or the reverse rotation of the driving input shaft 20.

The second sprag 32 is mounted on the driving input shaft 20, coupled with the ring gears 13 which are integrally geared with the plurality of planetary gears 12 rotating, engaging with the sun gears 11, and restricts or unrestricts the rotation of the ring gear 13 depending on the forward rotation or the reverse rotation of the driving input shaft 20.

The exemplary embodiment of the present invention illustrates and describes only the driving input shaft 20, but is not necessarily limited to the configuration. Instead of the driving input shaft 20 as illustrated in FIG. 1, a member 20 as illustrated in FIG. 2 may also be applied as the driving output shaft.

That is, as illustrated in FIG. 2, the driving output shaft 20 may be applied as the case in which the driving output shaft 20 rotates forwardly like ① to directly transfer a driving force to the sun gear 11 or the case in which the driving output shaft 20 rotate reversely like ② to be indirectly connected to the ring gear 13 so as to forwardly rotate at a low speed.

In addition, the exemplary embodiment of the present invention is not particularly illustrated, but in the reverse transmission apparatus according to the exemplary embodiment of the present invention is applied, a reverse stage dog clutch is applied and thus an apparatus which may perform forward and reverse shift operations may be applied.

That is, for a reverse movement, the dog clutch is applied to prevent the first sprag 31 or the second sprag 32 from being operated, and thus a rotation direction of an output stage may be adjusted to meet a reverse shift operation.

Further, when the reverse transmission apparatus according to the exemplary embodiment of the present invention is applied to an output stage sprag to perform a shift change in a slope road, and the like, the reverse transmission apparatus may also be used as a slip preventing apparatus which may prevent a vehicle from slipping.

Further, the exemplary embodiment of the present invention combines the foregoing reverse stage dog clutch with the slip preventing apparatus to selectively or simultaneously operate the reverse stage dog clutch and the slip preventing apparatus, thereby expanding a driver's width of selection.

That is, when the reverse stage dog clutch is released, the output stage sprag is operated simultaneously therewith or at a desired moment and when the reverse stage dog clutch is operated, a switching structure to release the output stage sprag may be applied to prevent a mutual interference between the slip prevention and the reverse apparatus.

In accordance with the exemplary embodiments of the present invention, the reverse transmission apparatus may perform the shift operation by simply changing only the direction of the input shift so as to be used for various applications without the shift operation mechanism such as the shift lever.

In particular, in accordance with the exemplary embodiments of the present invention, the reverse transmission apparatus may also be applied to various fields such as an electric vehicle for which the demand is expected to increase in future and thus may be considered to be highly likely to be widely used.

Although the exemplary embodiments of the present invention have been disclosed for illustrative purposes, those skilled in the art will appreciate that various modifications are possible, without departing from the scope and spirit of the invention as disclosed in the accompanying claims

Accordingly, the scope of the present invention is not construed as being limited to the described embodiments but is defined by the appended claims as well as equivalents thereto.

## Claims

1. A reverse transmission apparatus, comprising:
a gear assembly of a transmission;
a driving input shaft configured to be connected to the gear assembly; and
a sprag assembly configured to partially connect or cut off power of the gear assembly depending to a forward rotation or a reverse rotation of the driving input shaft so as to perform a shift operation.

2. The reverse transmission apparatus of claim 1, wherein the gear assembly includes:
sun gears configured to be connected to the driving input shaft;
a plurality of planetary gears rotating, engaging with the sun gears; and
ring gears configured to be internally geared with the plurality of planetary gears,
wherein the sprag assembly is coupled with the sun gear and the ring gear, respectively, through the driving input shaft.

3. The reverse transmission apparatus of claim 1, wherein the sprag assembly includes:
a first sprag configured to be mounted on the driving input shaft, coupled with the sun gear connected to the driving input shaft, and restrict or unrestrict the rotation of the sun gear depending on the forward rotation or the reverse rotation of the driving input shaft; and
a second sprag configured to be mounted on the driving input shaft, coupled with the ring gears internally geared with the plurality of planetary gears rotating, engaging with the sun gears, and restrict or unrestrict the rotation of the ring gear depending on the forward rotation or the reverse rotation of the driving input shaft.
